# EUROPEAN PATENT APPLICATION

(11) **EP 3 952 605 A1**
(43) Date of publication of application: **09.02.2022**
(21) Application number: 20777928.1
(22) Date of filing: 10.03.2020
(51) Int. Cl.: H04W 76/28

(54) **INFORMATION CONFIGURATION METHOD, NETWORK DEVICE, AND TERMINAL DEVICE**

(30) Priority: 27.03.2019 CN 201910239313
(71) Applicant: VIVO MOBILE COMMUNICATION CO., LTD., Dongguan, Guangdong 523860 (CN)
(72) Inventor: BAO, Wei, Dongguan, Guangdong 523860 (CN); CHEN, Li, Dongguan, Guangdong 523860 (CN)
(74) Representative: Conti, Marco
(86) International application number: PCT/CN2020/078617
(87) International publication number: WO 2020/192412

(57) **Abstract**

This disclosure discloses a method for configuring information, a network device, and a terminal device. When applied to a network device, the method includes: sending discontinuous reception DRX configuration information to a terminal device, where the DRX configuration information is used by the terminal device to determine M DRX configurations, and M is an integer greater than or equal to 2.

## Description

### CROSS-REFERENCE TO RELATED APPLICATIONS

This application claims priority to Chinese Patent Application No. 201910239313.5, filed in China on March 27, 2019, which is incorporated herein by reference in its entirety.

### TECHNICAL FIELD

This disclosure relates to the communications field, and in particular, to a method for configuring information, a network device, and a terminal device.

### BACKGROUND

In a process of communicating with a network device, to save electricity of a terminal device and reduce power consumption of the terminal device, the terminal device may discontinuously listen on a physical downlink control channel (Physical Downlink Control Channel, PDCCH) to discontinuously receive information sent by the network device. Usually, such an information receiving manner of a terminal device may be referred to as discontinuous reception (Discontinuous Reception, DRX).

To facilitate a DRX operation of a terminal device, a network device may configure a set of DRX parameters for the terminal device, so that the terminal device can perform the DRX operation based on the configured set of DRX parameters. However, in actual application, configured values of DRX parameters configured by a network device are usually fixed, and when a service of a terminal device changes or a battery status of a terminal device changes, cannot adapt to the service or the battery status well. This affects the service and power saving performance of the terminal device.

### SUMMARY

Embodiments of this disclosure provide a method for configuring information, a network device, and a terminal device, to resolve the following problem: In DRX, a network device configures only one set of DRX parameters for a terminal device, which cannot adapt to a service or a battery status of the terminal device well, and as a result, the service and power saving performance of the terminal device are affected.

To resolve the foregoing technical problem, this disclosure is implemented as follows:

According to a first aspect, a method for configuring information is provided, applied to a network device and including:
sending discontinuous reception DRX configuration information to a terminal device, where the DRX configuration information is used by the terminal device to determine M DRX configurations, and M is an integer greater than or equal to 2.

According to a second aspect, a method for configuring information is provided, applied to a terminal device and including:
receiving DRX configuration information from a network device, where the DRX configuration information is used by the terminal device to determine M DRX configurations, and M is an integer greater than or equal to 2.

According to a third aspect, a network device is provided, where the terminal device includes:
a sending module, configured to send discontinuous reception DRX configuration information to a terminal device, where the DRX configuration information is used by the terminal device to determine M DRX configurations, and M is an integer greater than or equal to 2.

According to a fourth aspect, a terminal device is provided, where the network device includes:
a receiving module, configured to receive DRX configuration information from a network device, where the DRX configuration information is used by the terminal device to determine M DRX configurations, and M is an integer greater than or equal to 2.

According to a fifth aspect, a network device is provided. The terminal device includes a processor, a memory, and a computer program stored in the memory and capable of running on the processor. When the computer program is executed by the processor, steps of the method according to the first aspect are implemented.

According to a sixth aspect, a terminal device is provided. The network device includes a processor, a memory, and a computer program stored in the memory and capable of running on the processor. When the computer program is executed by the processor, steps of the method according to the second aspect are implemented.

According to a seventh aspect, a computer-readable storage medium is provided. The computer-readable storage medium stores a computer program. When the computer program is executed by a processor, steps of the method according to the first aspect are implemented.

According to an eighth aspect, a computer-readable storage medium is provided. The computer-readable storage medium stores a computer program. When the computer program is executed by a processor, steps of the method according to the second aspect are implemented.

According to the technical solutions provided in the embodiments of this disclosure, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

### BRIEF DESCRIPTION OF DRAWINGS

The accompanying drawings described herein are intended for a further understanding of this disclosure and constitute a part of this disclosure. Example embodiments of this disclosure and descriptions thereof are intended to explain this disclosure, and do not constitute any inappropriate limitation on this disclosure. In the accompanying drawings:
FIG. 1 is a schematic flowchart of a method for configuring information according to an embodiment of this disclosure;
FIG. 2 is a schematic flowchart of a method for configuring information according to an embodiment of this disclosure;
FIG. 3 is a schematic structural diagram of a network device according to an embodiment of this disclosure;
FIG. 4 is a schematic structural diagram of a terminal device according to an embodiment of this disclosure;
FIG. 5 is a schematic structural diagram of a network device according to an embodiment of this disclosure; and
FIG. 6 is a schematic structural diagram of a terminal device according to an embodiment of this disclosure.

### DESCRIPTION OF EMBODIMENTS

In a related technology, a network device may configure DRX parameters for a terminal device, so that the terminal device can perform a DRX operation based on the DRX parameters. This saves electricity of the terminal device. Usually, when configuring DRX parameters for a terminal device, a network device may configure one DRX configuration, and the DRX configuration may include a configured value of a parameter that needs to be used when the terminal device performs a DRX operation and a configured value of a parameter that may be used when the terminal device performs the DRX operation, for example, a configured value of a parameter related to a long DRX cycle, a configured value of a parameter related to a short DRX cycle, and a configured value of a parameter related to transmission.

However, in actual application, configured values of these DRX parameters are usually fixed and cannot be dynamically adjusted. Therefore, in a process in which the terminal device performs the DRX operation based on these parameters, when a service of the terminal device changes or a battery status of the terminal device changes, these parameters cannot adapt to the service or the battery status well. This affects the service and power saving performance of the terminal device.

In view of this, embodiments of this disclosure provide a method for configuring information, a terminal device, and a network device. When applied to a network device, the method may include: sending discontinuous reception DRX configuration information to a terminal device, where the DRX configuration information is used by the terminal device to determine M DRX configurations, and M is an integer greater than or equal to 2.

In this way, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

The following clearly and completely describes the technical solutions in the embodiments of this disclosure with reference to the accompanying drawings in the embodiments of this disclosure. Apparently, the described embodiments are merely some rather than all of the embodiments of this disclosure. All other embodiments that a person of ordinary skill in the art obtains without creative efforts based on the embodiments of this disclosure shall fall within the protection scope of this disclosure.

The technical solutions in this disclosure may be applied to various communications systems, for example, a long term evolution (Long Term Evolution, LTE)/long term evolution advanced (Long Term Evolution advanced, LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, and a 5G system, also referred to as a new radio (New Radio, NR) system.

The terminal device may be understood as user equipment (User Equipment, UE), may also be referred to as a mobile terminal (Mobile Terminal), mobile user equipment, or the like, and can communicate with one or more core networks through a radio access network (Radio Access Network, RAN). The terminal device may be a mobile terminal, such as a mobile phone (also referred to as a "cellular" phone), or a computer with a mobile terminal, for example, may be a portable, pocket-sized, handheld, computer built-in, or vehicle-mounted mobile apparatus, or may be a flight device such as an unmanned aerial vehicle or an aircraft. These devices exchange voice and/or data with the radio access network.

The network device may be understood as a core network, or may be understood as a base station, where the base station may be a base transceiver station (Base Transceiver Station, BTS) in GSM or CDMA, a NodeB (NodeB) in WCDMA, an evolved NodeB (eNB or e-NodeB, evolutional Node B) in LTE, a 5G base station (gNB), or a network-side device in a subsequent evolved communications system. This is not limited in this disclosure, but for ease of description, the following embodiments use the gNB as an example for description.

The technical solutions provided in the embodiments of this disclosure are described in detail below with reference to the accompanying drawings.

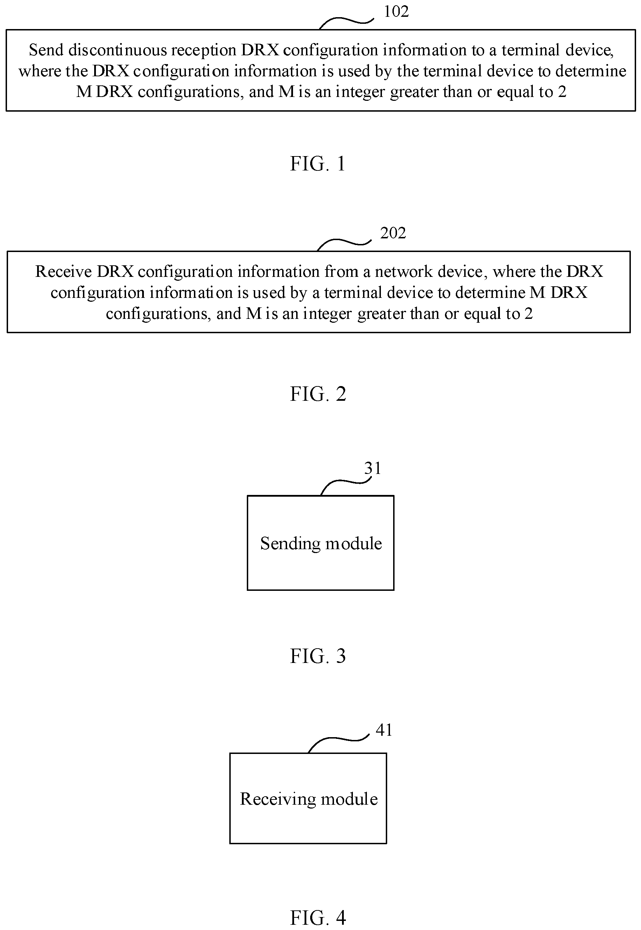

FIG. 1 is a schematic flowchart of a method for configuring information according to an embodiment of this disclosure. The method is applied to a network device, and the method is as follows.

S102: Send discontinuous reception DRX configuration information to a terminal device, where the DRX configuration information is used by the terminal device to determine M DRX configurations, and M is an integer greater than or equal to 2.

In S102, the network device may send the DRX configuration information to the terminal device when configuring DRX parameters for the terminal device. The DRX configuration information may be carried in radio resource control (Radio Resource Control, RRC) signaling, and may be specifically used by the terminal device to determine the M DRX configurations, where M is an integer greater than or equal to 2.

In this way, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device.

In this embodiment, the DRX configuration information may include at least a first DRX configuration and a second DRX configuration. When M=2, each of the first DRX configuration and the second DRX configuration represents one DRX configuration. When M is greater than 2, the first DRX configuration is one of the DRX configurations, and the second DRX configuration may be any one of the rest of the DRX configurations.

Optionally, the first DRX configuration may be a default configuration. The default configuration is used by the terminal device to perform a DRX operation when activating a DRX state. Alternatively, the first DRX configuration may be the first of the M DRX configurations that appears in the RRC signaling.

For the first DRX configuration, the network device may configure, in the first DRX configuration, configured values of DRX parameters required for the first DRX configuration, where the DRX parameters required for the first DRX configuration may include at least two of the following:
a cycle and an offset of a long DRX cycle (drx-LongCycleStartOffset);
DRX continuous-listening timer duration (drx-onDurationTimer);
a DRX slot offset (drx-SlotOffset);
DRX inactivity timer duration (drx-InactivityTimer);
downlink hybrid automatic repeat request round trip time (DL HARQ RTT, Down Link Hybrid Automatic Repeat request Round-Trip Time) timer duration (drx-HARQ-RTT-TimerDL);
uplink HARQ RTT timer duration (drx-HARQ-RTT-TimerUL);
downlink retransmission timer duration (drx-RetransmissionTimerDL);
uplink retransmission timer duration (drx-RetransmissionTimerUL);
a cycle and an offset of a short DRX cycle (drx-ShortCycle); and
use duration of a short DRX cycle (drx-ShortCycleTimer).

For the second DRX configuration, when configuring DRX parameters in the second DRX configuration, the network device may use at least the following several manners:

### First implementation:

If all DRX parameters in the first DRX configuration are parameters required for the second DRX configuration, a solution is as follows:

If configured values of these DRX parameters are all different from those in the first DRX configuration, the configured values of these DRX parameters need to be provided in the second DRX configuration, that is, the second DRX configuration may include all the DRX parameters in the first DRX configuration, and the configured values of all the DRX parameters are different from those in the first DRX configuration.

If a configured value of some of these DRX parameters is the same as that in the first DRX configuration, in the second DRX configuration, the configured value of the some of the DRX parameters may be absent by default, and only a configured value different from that in the first DRX configuration is present, that is, the second DRX configuration may include some of the DRX parameters in the first DRX configuration, and configured values of the some of the DRX parameters in the first DRX configuration are different from those in the second DRX configuration.

For example, when the DRX parameters in the first DRX configuration are configured, configured values of five DRX parameters A, B, C, D, and E are configured. In this case, when DRX parameters in the second DRX configuration are configured, the five DRX parameters A, B, C, D, and E also need to be configured. Then, further, if configured values of B and C are the same as those in the first DRX configuration, a configuration result of the second DRX configuration is that the second DRX configuration includes configured values of A, D, and E and does not include the configured values of B and C; if configured values of A, B, C, D, and E are different from those in the first DRX configuration, a configuration result of the second DRX configuration is that the second DRX configuration includes the configured values of A, B, C, D, and E.

Optionally, if the second DRX configuration further requires a DRX parameter other than the DRX parameters in the first DRX configuration, a configured value of the another DRX parameter further needs to be configured in the second DRX configuration. In other words, the second DRX configuration further includes the configured value of the DRX parameter other than the DRX parameters in the first DRX configuration.

For example, the first DRX configuration includes configured values of five DRX parameters A, B, C, D, and E. In this case, when DRX parameters in the second DRX configuration are configured, if parameters A, B, C, D, E, and F need to be configured, and configured values of B, C, and D are the same as those in the first DRX configuration, a configuration result of the second DRX configuration is that the second DRX configuration includes configured values of A, E, and F and does not include the configured values of B and C.

Optionally, if the second DRX configuration includes all the DRX parameters in the first DRX configuration, configured values of all the DRX parameters in the first DRX configuration are the same as those in the second DRX configuration, and the second DRX configuration further includes a DRX parameter other than the DRX parameters in the first DRX configuration, when DRX parameters in the second DRX configuration are configured, the second DRX configuration may not include the DRX parameters in the first DRX configuration, but include a configured value of the DRX parameter other than the DRX parameters in the first DRX configuration.

For example, the first DRX configuration includes configured values of five DRX parameters A, B, C, D, and E. In this case, when DRX parameters in the second DRX configuration are configured, if parameters A, B, C, D, E, and F need to be configured, and configured values of A, B, C, D, and E are the same as those in the first DRX configuration, a configuration result of the second DRX configuration is that the second DRX configuration includes a configured value of F and does not include the configured values of A, B, C, D, and E.

It can be learned that, in the first manner, the network device may configure, in the first DRX configuration, the DRX parameters required for the first DRX configuration (optionally, the first DRX configuration may include the 10 DRX parameters mentioned above, or may include DRX parameters other than optional DRX parameters (for example, parameters related to a short DRX cycle) in the 10 DRX parameters), and use the first DRX configuration as a basis when configuring the DRX parameters in the second DRX configuration. If a required DRX parameter in the second DRX configuration is the same as a DRX parameter in the first DRX configuration, the second DRX configuration needs to carry only a configured value different from that in the first DRX configuration, and does not carry, by default, any configured value the same as that in the first DRX configuration. If the second DRX configuration further includes a DRX parameter other than the DRX parameters in the first DRX configuration, the second DRX configuration may further carry a configured value of the another DRX parameter.

It should be noted that, for a configured value that is not carried in the second DRX configuration by default, a corresponding configured value in the first DRX configuration may be reused. To be specific, when performing a DRX operation based on the second DRX configuration, the terminal device may perform the DRX operation based on a configured value, of a specified DRX parameter, in the first DRX configuration and a configured value, of a DRX parameter, in the second DRX configuration, where the configured value of the specified DRX parameter is the configured value that is absent in the second DRX configuration by default.

### Second implementation:

If DRX parameters required for the second DRX configuration are some of DRX parameters in the first DRX configuration, when DRX parameters in the second DRX configuration are configured, the second DRX configuration may include invalidity indication information, and the invalidity indication information is used to indicate that a first part of DRX parameters in the first DRX configuration is invalid in the second DRX configuration.

Further, for the some of the DRX parameters in the first DRX configuration required for the second DRX configuration, when the network device configures these DRX parameters, an implementation may be the same as the foregoing first implementation, that is, the second DRX configuration may further include a second part of DRX parameters in the first DRX configuration, and configured values of the second part of DRX parameters in the first DRX configuration are different from those in the second DRX configuration. Details are not described herein again.

For example, the first DRX configuration includes configured values of five DRX parameters A, B, C, D, and E. In this case, when DRX parameters in the second DRX configuration are configured, if the second DRX configuration requires the parameters A, B, C, and D and does not require the parameter E, further, a solution is as follows:

If configured values of A, B, C, and D are all different from those in the first DRX configuration, a configuration result of the second DRX configuration is that the second DRX configuration includes the configured values of A, B, C, and D and invalidity indication information of E.

If configured values of A, B, C, and D are all the same as those in the first DRX configuration, a configuration result of the second DRX configuration is that the second DRX configuration includes invalidity indication information of E.

If configured values of B and C are the same as those in the first DRX configuration, a configuration result of the second DRX configuration is that the second DRX configuration includes configured values of A and D, does not include the configured values of B and C, and includes invalidity indication information of E.

It can be learned that, in the second implementation, the network device may configure, in the first DRX configuration, the DRX parameters required for the first DRX configuration (optionally, the first DRX configuration may include the 10 DRX parameters mentioned above), and use the first DRX configuration as a basis when configuring the DRX parameters in the second DRX configuration. If the second DRX configuration does not require some of the DRX parameters in the first DRX configuration, the second DRX configuration may include invalidity indication information used to indicate that the some of the DRX parameters are/is invalid in the second DRX configuration. For the rest of the DRX parameters in the first DRX configuration required for the second DRX configuration, the second DRX configuration needs to carry only a configured value different from that in the first DRX configuration.

It should be noted that, if the second DRX configuration has a configured value that is absent by default, a corresponding configured value in the first DRX configuration may be reused. For details, refer to related content described in the foregoing first implementation. Details are not described herein again.

### Third implementation:

In the second DRX configuration, configured values of all DRX parameters required for the second DRX configuration may be configured. These DRX parameters may be the same as or may be different from DRX parameters in the first DRX configuration. If these DRX parameters are the same as the DRX parameters in the first DRX configuration, a configured value of at least one of the same DRX parameters in the first DRX configuration is different from that in the second DRX configuration.

For example, the first DRX configuration includes configured values of five DRX parameters A, B, C, D, and E, the second DRX configuration includes configured values of six DRX parameters A, B, C, D, E, and F, and the configured values of A, B, C, D, and E in the first DRX configuration are the same as those included in the second DRX configuration.

For another example, the first DRX configuration includes configured values of five DRX parameters A, B, C, D, and E, the second DRX configuration includes configured values of the five DRX parameters A, B, C, D, and E, and configured values of A, B, C, and D in the first DRX configuration are the same as those included in the second DRX configuration.

It should be noted that the first implementation and the second implementation described above may be understood as that the network device configures the M DRX configurations together, and a configuration manner is differentiated configuration. The differentiated configuration manner can reduce signaling overheads. The third implementation described above may be understood as that the network device configures each DRX configuration separately, and configures DRX parameters required for each DRX configuration.

In actual application, the DRX parameters in the second DRX configuration may be configured by selecting any implementation based on an actual case. For example, for a purpose of reducing signaling, configuration may be performed by using the first implementation or the second implementation; for a purpose of ensuring integrity of each DRX configuration, configuration may be performed by using the third implementation.

In this embodiment, alternatively, the DRX configuration information may not explicitly include the M DRX configurations. Specifically, when configuring the M DRX configurations, the network device may classify a plurality of required DRX parameters in all the DRX configurations based on whether configured values of these DRX parameters change in the M DRX configurations, to obtain a fixed DRX parameter and a variable DRX parameter. A configured value of the fixed DRX parameter is fixed in the M DRX configurations, and a configured value of the variable DRX parameter is variable in the M DRX configurations.

When the network device sends the DRX configuration information to the terminal device, the DRX configuration information may include one first parameter set and M second parameter sets. The first parameter set includes the configured value of the fixed DRX parameter. The second parameter set includes the configured value of the variable DRX parameter. Different second parameter sets include different configured values of the variable DRX parameter.

Therefore, when receiving the DRX configuration information, the terminal device can determine one DRX configuration based on the first parameter set and one second parameter set, and determine the M DRX configurations based on the first parameter set and the M second parameter sets.

Optionally, when configuring the M DRX configurations, the network device may alternatively divide all DRX parameters in one DRX configuration into groups, to obtain a plurality of parameter sets, where one parameter set may include a configured value of at least one DRX parameter.

Optionally, all DRX parameters in one DRX configuration may be divided into two parameter sets, where a first parameter set may be DRX parameters related to a service burst characteristic, for example, a cycle-related parameter, DRX continuous-listening timer duration, and DRX inactivity timer duration, and a second parameter set may be DRX parameters related to transmission, for example, DRX HARQ RTT timer duration and DRX retransmission timer duration.

One parameter set may correspond to values of the M configurations. For a method for configuring a parameter in one parameter set, the foregoing configuration principle for an entire DRX configuration may also be used. For example, for the first parameter set, if each of the plurality of configurations includes all DRX parameters in the first parameter set, a first configuration may provide configured values of all the DRX parameters; in each of the rest of the configurations, only a configured value, of a parameter, different from that in the first configuration needs to be provided, and an absent configured value of the rest of the parameters is the same as that in the first configuration by default. Similar processing may be performed on all other parameter sets.

In this embodiment, when configuring DRX parameters, the network device may further establish an association relationship between target DRX parameters in the M DRX configurations and an active resource set. The target DRX parameter is a DRX parameter used by the terminal device when performing a DRX operation on the active resource set. The active resource set may include a carrier or a bandwidth part (bandwidth part, BWP).

For example, a DRX parameter related to transmission may be bound to or associated with the BWP. Specifically, DRX index2=1 may be bound to or associated with a BWP2, and DRX index2=2 may be bound to or associated with a BWP3, where DRX index2=1 and DRX index2=2 may be understood as different configured values of the DRX parameter related to transmission. After association, if the network device instructs the terminal device to switch between BWPs, corresponding switching between related DRX parameters also needs to be performed.

In this embodiment, if the DRX configuration information explicitly includes the M DRX configurations, each DRX configuration may be further identified, that is, a configuration index is determined for each DRX configuration. In this way, when the network device needs to perform an operation such as dynamic activation/deactivation/parameter switching on the M DRX configurations, the operation can be implemented based on configuration indices of the M DRX configurations.

An implementation of determining a configuration index for each DRX configuration is as follows: Each DRX configuration may carry an explicit configuration index (configuration index), for example, an index of the first DRX configuration appearing in the RRC signaling is set to 0, an index of the second DRX configuration appearing in the RRC signaling is set to 1, an index of the third DRX configuration appearing in the RRC signaling is set to 2, and so on.

It should be noted that indices of the M DRX configurations may be consecutive (for example, 0, 1, 2, 3, ...), or may be inconsecutive (for example, 0, 2, 4, 6, ...), provided that a total number of the indices is not exceeded. Generally, a maximum allowed range is determined for the indices. Considering overheads and a design of control signaling (such as L1/L2) of the network device, a maximum index space may be a numerical value, to be specific, the network device is allowed to configure a maximum of, for example, two, four, or eight sets of DRX parameters for the terminal device.

Another implementation of determining a configuration index for each DRX configuration is as follows: A sequence of the M DRX configurations in the RRC signaling is used as indices of the M DRX configurations. To be specific, there is a mapping relationship between locations of the DRX configurations in the RRC signaling and configuration indices, and the mapping relationship may be agreed upon by the network device and the terminal device in advance. In this implementation, different from that in the first implementation, configuration signaling does not need to include an index field. This reduces signaling overheads.

For example, the first DRX configuration appearing in the RRC signaling corresponds to index=0, the second DRX configuration appearing in the RRC signaling corresponds to index=1, the third DRX configuration appearing in the RRC signaling corresponds to index=2, and so on. In this implementation, because a default mapping relationship is used between the sequence of the DRX configurations in the RRC signaling and the indices, the indices usually need to be consecutive, and are limited by a maximum index value, that is, a maximum number of DRX configurations that can be configured by the network device.

In this embodiment, if the DRX configuration information does not explicitly include the M DRX configurations, but includes one first parameter set and M second parameter sets (for details, refer to related content described above), alternatively, a sub configuration index may be determined for each second parameter set. In this way, the network device can perform an operation such as dynamic activation/deactivation/parameter switching on the second parameter set based on the sub configuration index.

Optionally, if DRX parameters included in one DRX configuration are divided into a plurality of parameter sets, and one parameter set corresponds to the M configurations, a set index may be determined for each parameter set (for example, a set index index1 is used for a first parameter set, and a set index index2 is used for a second parameter set), and based on this, intra-set indices of the M configurations in each parameter set are determined. A method for determining an intra-set index is the same as the foregoing method for determining a configuration index of each DRX configuration, and details are not described herein again.

After determining intra-set indices in each parameter set, the network device may dynamically control, by using control signaling (L1/L2 signaling), the terminal device to activate a configured value corresponding to index 1=1 in the first parameter set index1 and a configured value corresponding to index2=2 in the second parameter set index2, or activate a configured value corresponding to index 1=2 in the first parameter set index1 and a configured value corresponding to index2=3 in the second parameter set index2, or the like.

The foregoing uses examples to describe how to mark the M DRX configurations or the plurality of parameter sets. Based on the configuration indices of the DRX configurations or sub configuration indices, set indices, or the like of the parameter sets, control information (for example, L1/L2 signaling) of the network device can easily notify the terminal device of to-be-activated or to-be-operated DRX configurations or DRX parameters by using these indices. Specific configured values of these parameters are already configured by using the DRX configuration information, so that the network device and the terminal device can accurately use a same set of DRX parameters to simultaneously perform a DRX-related operation.

In addition, because the network device can implement an operation such as dynamic activation/deactivation/parameter switching on the M DRX configurations based on the configuration indices of the M DRX configurations or sub configuration indices, set indices, or the like of the parameter sets, and a configured value of a specific DRX parameter does not need to be carried, signaling overheads can also be reduced, and fast operation is facilitated.

Optionally, if the number of DRX configurations configured by the network device for the terminal device is comparatively small, configuration indices may not be required for distinguishing between different DRX configurations, and another identification manner may be used. For example, if M=2, one of the DRX configurations is a normal configuration, and the other DRX configuration is a power saving configuration. When activating one of the configurations by using control signaling (for example, L1/L2), the network device may directly distinguish between different configurations by using another field in the control signaling (for example, distinguish between different configurations by using "command type"), to determine whether to activate the normal configuration or activate the power saving configuration.

In this embodiment, when the network device configures the M DRX configurations, the M DRX configurations may further include a default configuration. The default configuration may be used by the terminal device to perform a DRX operation when activating a DRX state.

The network device may use an implicit indication method to indicate which of the M DRX configurations is the default configuration, or may use an explicit indication method to indicate which of the M DRX configurations is the default configuration. Details are as follows:

If the configuration information explicitly includes the M DRX configurations, when the default configuration is indicated by using the implicit indication method, the network device and the terminal device may agree, in advance, that the first of the M DRX configurations that appears in the RRC signaling is the default configuration, or agree, in advance, that a DRX configuration corresponding to a specified configuration index is the default configuration. For example, if the specified configuration index is 0, a DRX configuration whose configuration index is 0 is the default configuration.

When the default configuration is indicated by using the explicit indication method, at least the following three methods may be included:

First method: The DRX configuration information may carry a default index, and a DRX configuration whose configuration index is the default index is the default configuration.

For example, the DRX configuration information may carry the default index, namely, default index=2, and in this case, a DRX configuration whose configuration index is 2 is the default configuration.

Second method: Each of the M DRX configurations includes an index used to indicate whether the DRX configuration is the default configuration. In the default configuration, the index is a default value. In another DRX configuration, the index is not the default value. In this way, the default index can be determined based on whether the index carried in the M DRX configurations is the default value.

For example, an index "default value" may be carried in an optional field of each DRX configuration, where a value of "default value" in the default configuration is "true", and a value of "default value" in another DRX configuration is "false".

Third method: In the M DRX configurations, only the default configuration carries an index used to indicate whether the DRX configuration is the default configuration, and the index is a default value. The rest of the DRX configurations does not carry the index used to indicate whether the DRX configuration is the default configuration.

For example, an index "default value" may be carried in an optional field of the default configuration, where a value of "default value" is "true", and the rest of the DRX configurations does not carry the index "default value".

In this embodiment, the network device may further indicate, to the terminal device, an operation to be performed after the DRX configuration information is received.

In an implementation, the network device may implicitly indicate an operation to be performed by the terminal device. This may specifically include the following two cases:

### First case:

The network device and the terminal device may further agree upon "configuration as activation" in advance. To be specific, when receiving the DRX configuration information, the terminal device starts to activate a DRX configuration (which is usually the default configuration or a specified DRX configuration), and immediately performs a DRX operation by using the configuration, until control signaling (for example, L1/L2 signaling, which may be specifically used to indicate that the terminal device performs an operation such as deactivation or deconfiguration) of the network device is received again.

### Second case:

The network device and the terminal device may further agree upon "configuration as deactivation" in advance. To be specific, when the terminal device receives the DRX configuration information, a behavior of the terminal device is merely storing the M DRX configurations, and not starting to perform a DRX operation, until receiving activation control signaling of the network device and performing the DRX operation based on the signaling.

In another implementation, the network device may explicitly indicate an operation to be performed by the terminal device. This may specifically include the following two cases:

### First case:

When the DRX configuration information is sent to the terminal device, the DRX configuration information may further carry a DRX state option, and the DRX state option is used by the terminal device to perform, when receiving the DRX configuration information, an operation corresponding to the DRX state option.

The DRX state option may include activation or deactivation. If the DRX state option includes activation, the DRX state option is used by the terminal device to perform a DRX operation when receiving the DRX configuration information, to be specific, once receiving the DRX configuration information, the terminal device immediately starts to activate a DRX configuration (which is usually a default configuration or a specified DRX configuration), and performs the DRX operation by using the configuration, until control signaling of the network device is received again.

If the DRX state option includes deactivation, the DRX state option is used by the terminal device to store the M DRX configurations when receiving the DRX configuration information, to be specific, once receiving the DRX configuration information, the terminal device merely stores the M DRX configurations, and does not start to perform a DRX operation, until receiving activation control signaling of the network device and performing the DRX operation based on the signaling.

### Second case:

When the network device sends the DRX configuration information to the terminal device, the DRX configuration information may carry operation indication information, and the operation indication information may be used to indicate that the terminal device performs at least one of the following operations after receiving the DRX configuration information:
activating a DRX state at a first occasion, or performing a deactivation operation at a second occasion, where the first occasion may be earlier than the second occasion, or may be later than the second occasion.

To be specific, if the operation indication information is used to indicate that the terminal device activates the DRX state at the first occasion, when receiving the DRX configuration information that carries the operation indication information, the terminal device starts to activate a DRX configuration (which is usually a default configuration or a specified DRX configuration) at the first occasion, until control signaling of the network device is received again.

If the operation indication information is used to indicate that the terminal device performs the deactivation operation at the second occasion, when receiving the DRX configuration information that carries the operation indication information, the terminal device performs the deactivation operation on a current DRX configuration at the second occasion, until new control signaling of the network device is received again.

If the operation indication information is used to indicate that the terminal device activates the DRX state at the first occasion and performs the deactivation operation at the second occasion, further, a solution is as follows:

If the first occasion is later than the second occasion, when receiving the DRX configuration information that carries the operation indication information, the terminal device performs the deactivation operation on a current DRX configuration at the second occasion, and starts to activate a DRX configuration (which is usually a default configuration or a specified DRX configuration) at the first occasion, until control signaling of the network device is received again.

If the first occasion is earlier than the second occasion, when receiving the DRX configuration information that carries the operation indication information, the terminal device starts to activate a DRX configuration (which is usually a default configuration or a specified DRX configuration) at the first occasion, and performs the deactivation operation on a current DRX configuration at the second occasion, until control signaling of the network device is received again.

In this embodiment, the network device may further send condition information to the terminal device, where the condition information is used by the terminal device to automatically resume a specified DRX configuration.

Optionally, the specified DRX configuration may be a power saving configuration for the terminal device in the plurality of DRX configurations. In this way, the terminal device can save electricity of the terminal device by automatically resuming the specified DRX configuration.

Optionally, the specified DRX configuration may be alternatively a default configuration.

The condition information may include preset duration. The preset duration may be used by the terminal device to resume the specified DRX configuration when first duration is greater than or equal to the preset duration, or resume the specified DRX configuration at the start of the first DRX cycle after accumulative timing of first duration stops. The first duration is accumulated duration during which the terminal device does not have uplink or downlink data transmission.

The condition information may alternatively include a preset DRX cycle number. The preset DRX cycle number may be used by the terminal device to resume the specified DRX configuration when the number of DRX cycles included in first duration is greater than or equal to the preset DRX cycle number, or resume the specified DRX configuration at the start of the first DRX cycle after accumulative timing of first duration stops.

It should be noted that, when configuring the condition information for the terminal device, the network device may uniformly perform the configuration, that is, different DRX configurations correspond to same condition information; or may separately perform the configuration, that is, different DRX configurations correspond to different condition information. This is not specifically limited herein.

It should be further noted that, when the terminal device resumes the specified DRX configuration, the network device may need to be synchronous with the terminal device. To be specific, once an automatic-resume condition of the terminal device is met, it means that a condition for the network device to perform simultaneous maintenance is also met, and the network device needs to synchronously return to a state of the specified DRX configuration.

In this embodiment, the network device may further reconfigure and deconfigure the M DRX configurations.

An implementation of reconfiguration is as follows:

After sending the DRX configuration information to the terminal device, the network device may further send reconfiguration indication information to the terminal device. The reconfiguration indication information is used to reconfigure the M DRX configurations configured by the network device.

The reconfiguration may be full configuration. In this case, the reconfiguration indication information further includes N DRX configurations, where N is an integer greater than or equal to 1. This can help the terminal device to update the M DRX configurations with the N DRX configurations.

Alternatively, the reconfiguration may be incremental configuration. In this case, the reconfiguration indication information may further include L DRX configurations, where L is an integer greater than or equal to 1. This can help the terminal device to perform incremental configuration on the M DRX configurations based on the L DRX configurations.

In an implementation, the L DRX configurations may be a newly added configuration. To be specific, the M DRX configurations are retained by default, and based on this, the L DRX configurations are added.

In another implementation, when the reconfiguration is incremental configuration, and the L DRX configurations are not a newly added DRX configuration, the reconfiguration indication information may further include at least one of a first configuration index or a second configuration index. The first configuration index is a configuration index corresponding to a to-be-retained DRX configuration in the M DRX configurations, and the second configuration index is a configuration index corresponding to a to-be-updated DRX configuration in the M DRX configurations.

If the reconfiguration indication information includes the first configuration index, the reconfiguration indication information may be used to retain the DRX configuration corresponding to the first configuration index in the M DRX configurations, and all the rest of the DRX configurations may be updated with the L DRX configurations. For the terminal device, after the terminal device receives the reconfiguration indication information, a behavior of the terminal device may be retaining the DRX configuration corresponding to the first configuration index in the M DRX configurations, and all the rest of the DRX configurations may be updated with the L DRX configurations.

If the reconfiguration indication information includes the second configuration index, the reconfiguration indication information may be used to update, with the L DRX configurations, all DRX configurations corresponding to the second configuration index in the M DRX configurations, and the rest of the DRX configurations may be retained by default, or may be deleted by default. For the terminal device, after the terminal device receives the reconfiguration indication information, a behavior of the terminal device may be updating, with the L DRX configurations, all the DRX configurations corresponding to the second configuration index in the M DRX configurations, and the rest of the DRX configurations may be retained by default, or may be deleted by default.

If the reconfiguration indication information includes the first configuration index and the second configuration index, the reconfiguration indication information may be used to retain the DRX configuration corresponding to the first configuration index in the M DRX configurations, and update, with the L DRX configurations, all DRX configurations corresponding to the second configuration index in the M DRX configurations, and the rest of the DRX configurations (if there is any) may be retained by default, or may be deleted by default. For the terminal device, after the terminal device receives the reconfiguration indication information, a behavior of the terminal device may be retaining the DRX configuration corresponding to the first configuration index in the M DRX configurations, and updating, with the L DRX configurations, all the DRX configurations corresponding to the second configuration index in the M DRX configurations, and the rest of the DRX configurations (if there is any) may be retained by default, or may be deleted by default.

In other words, when the reconfiguration is incremental configuration, which of the M DRX configurations needs to be retained and which of the M DRX configurations needs to be updated may be explicitly indicated.

An implementation of deconfiguration is as follows:

After sending the DRX configuration information to the terminal device, the network device may further send deconfiguration indication information to the terminal device. The deconfiguration indication information may be used to deconfigure at least one of the M DRX configurations.

In this embodiment, the deconfiguration indication information may include a third configuration index, and the third configuration index is a configuration index corresponding to a to-be-deleted DRX configuration in the M DRX configurations. In this way, after receiving the deconfiguration indication information, the terminal device can delete the DRX configuration corresponding to the third configuration index in the M DRX configurations.

Optionally, if the DRX configuration information does not explicitly include the M DRX configurations, for example, the DRX configuration information includes one first parameter set and M second parameter sets, or the DRX configuration information includes a plurality of parameter sets, where one parameter set corresponds to the M configurations, reconfiguration or deconfiguration of the M DRX configurations may be alternatively implemented by using sub configuration indices of the M second parameter sets, indices of the plurality of sets, or intra-set indices in each parameter set. For a specific implementation, refer to the foregoing method for reconfiguring or deconfiguring an entire DRX configuration. Details are not described herein again.

According to the technical solutions provided in this embodiment of this disclosure, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

FIG. 2 is a schematic flowchart of a method for configuring information according to an embodiment of this disclosure. The method is applied to a terminal device, and the method is as follows.

S202: Receive DRX configuration information from a network device, where the DRX configuration information is used by the terminal device to determine M DRX configurations, and M is an integer greater than or equal to 2.

In S202, when configuring DRX parameters for the terminal device, the network device may send the DRX configuration information to the terminal device, and then, the terminal device may receive the DRX configuration information from the network device. The DRX configuration information may be carried in RRC signaling, and may be specifically used by the terminal device to determine the M DRX configurations, where M is an integer greater than or equal to 2.

In this way, the network device can configure a plurality of DRX configurations for the terminal device, and therefore, the network device can flexibly select a suitable DRX configuration based on a current service characteristic or battery status of the terminal device, and further control the terminal device to perform a DRX operation based on the DRX configuration, so as to better adapt to a service transmission requirement of the terminal device, and save electricity of the terminal device. This improves battery efficiency and user experience.

In this embodiment, the DRX configuration information may include at least a first DRX configuration and a second DRX configuration. When M=2, each of the first DRX configuration and the second DRX configuration represents one DRX configuration. When M is greater than 2, the first DRX configuration is one of the DRX configurations, and the second DRX configuration may be any one of the rest of the DRX configurations.

Optionally, the first DRX configuration may be a default configuration. The default configuration is used by the terminal device to perform a DRX operation when activating a DRX state. Alternatively, the first DRX configuration may be the first of the M DRX configurations that appears in the RRC signaling.

For the first DRX configuration, the network device may configure, in the first DRX configuration, configured values of DRX parameters required for the first DRX configuration, where the DRX parameters required for the first DRX configuration may include at least two of the following:
a cycle and an offset of a long DRX cycle; DRX continuous-listening timer duration; a DRX slot offset; DRX inactivity timer duration; downlink hybrid automatic repeat request round trip time timer duration; uplink HARQ RTT timer duration; downlink retransmission timer duration; uplink retransmission timer duration; a cycle and an offset of a short DRX cycle; and use duration of a short DRX cycle.

For the second DRX configuration, when configuring DRX parameters in the second DRX configuration, the network device may use at least the following several manners:

### First manner:

If all DRX parameters in the first DRX configuration are parameters required for the second DRX configuration, the second DRX configuration includes some or all of the DRX parameters in the first DRX configuration, and configured values of the some or all of the DRX parameters in the first DRX configuration are different from those in the second DRX configuration.

Further, if the second DRX configuration further requires a DRX parameter other than the DRX parameters in the first DRX configuration, the second DRX configuration may further include a configured value of the DRX parameter other than the DRX parameters in the first DRX configuration.

Optionally, the second DRX configuration may include no DRX parameter in the first DRX configuration, but include configured values of DRX parameters other than DRX parameters in the first DRX configuration.

For a specific configuration manner of the DRX parameters in the second DRX configuration in the first manner, refer to descriptions of corresponding content in the embodiment shown in FIG. 1. Details are not described herein again.

### Second manner:

If DRX parameters required for the second DRX configuration are some of DRX parameters in the first DRX configuration, the second DRX configuration includes invalidity indication information, and the invalidity indication information is used to indicate that a first part of DRX parameters in the first DRX configuration is invalid in the second DRX configuration.

Further, the second DRX configuration further includes a second part of DRX parameters in the first DRX configuration, and configured values of the second part of DRX parameters in the first DRX configuration are different from those in the second DRX configuration.

For a specific configuration manner of the DRX parameters in the second DRX configuration in the second manner, refer to descriptions of corresponding content in the embodiment shown in FIG. 1. Details are not described herein again.

It should be noted that, for the foregoing first implementation and second implementation, when performing a DRX operation based on the second DRX configuration after receiving the DRX configuration information, if the terminal device needs to reuse a configured value, of a specified DRX parameter, in the first DRX configuration (the configured value of the specified DRX parameter is a configured value that is absent in the second DRX configuration by default), the terminal device may perform the DRX operation based on the configured value of the specified DRX parameter and a configured value, of a DRX parameter, in the second DRX configuration.

### Third implementation:

In the second DRX configuration, configured values of all DRX parameters required for the second DRX configuration may be configured. These DRX parameters may be the same as or may be different from DRX parameters in the first DRX configuration. If these DRX parameters are the same as the DRX parameters in the first DRX configuration, a configured value of at least one of the same DRX parameters in the first DRX configuration is different from that in the second DRX configuration.

It should be noted that the first implementation and the second implementation described above may be understood as that the network device configures the M DRX configurations together, and a configuration manner is differentiated configuration. The differentiated configuration manner can reduce signaling overheads. The third implementation described above may be understood as that the network device configures each DRX configuration separately, and configures DRX parameters required for each DRX configuration.

In actual application, the DRX parameters in the second DRX configuration may be configured by selecting any implementation based on an actual case. For example, for a purpose of reducing signaling, configuration may be performed by using the first implementation or the second implementation; for a purpose of ensuring integrity of each DRX configuration, configuration may be performed by using the third implementation.

In this embodiment, alternatively, the DRX configuration information may not explicitly include the M DRX configurations.

Specifically, the DRX configuration information may include one first parameter set and M second parameter sets. The first parameter set includes a configured value of a fixed DRX parameter. The second parameter set includes a configured value of a variable DRX parameter. Different second parameter sets include different configured values of the variable DRX parameter. For detailed descriptions, refer to descriptions of corresponding content in the embodiment shown in FIG. 1. Details are not described herein again.

It should be noted that, if the DRX configuration information includes the first parameter set and the M second parameter sets, when performing a DRX operation, the terminal device may perform the DRX operation based on a configured value of a DRX parameter included in the first parameter set and a configured value of a DRX parameter included in a second parameter set corresponding to a specified sub configuration index, where a sub configuration index is an index allocated by the network device to each second parameter set.

Optionally, if the network device divides all DRX parameters in one DRX configuration into a plurality of parameter sets when configuring the M DRX configurations, when performing a DRX operation, the terminal device may alternatively perform the DRX operation based on configured values of DRX parameters corresponding to specified intra-set indices in different set indices, for example, perform the DRX operation based on a configured value corresponding to index1=1 in a first parameter set index1 and a configured value corresponding to index2=2 in a second parameter set index2.

In this embodiment, if the network device establishes an association relationship between target DRX parameters in the M DRX configurations and an active resource set when configuring DRX parameters, when performing a DRX operation on the active resource set, the terminal device may perform the DRX operation by using a configured value of the target DRX parameter in the M DRX configurations. There is the association relationship between the target DRX parameters and the active resource set, and the active resource set includes a carrier or a BWP.

In this embodiment, each DRX configuration configured by the network device may further correspond to a configuration index.

In an implementation, the DRX configuration information may explicitly include the M DRX configurations, and each DRX configuration may carry an explicit configuration index.

If the DRX configuration information includes one first parameter set and M second parameter sets, each second parameter set may carry an explicit sub configuration index.

In another implementation, if the DRX configuration information explicitly includes the M DRX configurations, there is a mapping relationship between locations of the DRX configurations in the RRC signaling and configuration indices. A configuration index of each DRX configuration may be determined based on the mapping relationship.

For a specific implementation of determining configuration indices for the M DRX configurations by the network device, refer to corresponding content described in the embodiment shown in FIG. 1. Details are not described herein again.

Optionally, if the network device divides DRX parameters included in one DRX configuration into a plurality of parameter sets, where one parameter set corresponds to the M configurations, each parameter set may also correspond to a set index. For a specific implementation, refer to corresponding content described in the embodiment shown in FIG. 1. Details are also not described herein again.

In this embodiment, when configuring the M DRX configurations, the network device may further determine a default configuration from the M DRX configurations. The default configuration may be used by the terminal device to perform a DRX operation when activating a DRX state.

The default configuration may be determined in an implicit manner. Details are as follows:

When the DRX configuration information explicitly includes the M DRX configurations, the default configuration is the first of the M DRX configurations that appears in the RRC signaling, or the default configuration is a DRX configuration in the M DRX configurations that corresponds to a specified configuration index.

The default configuration may be alternatively determined in an explicit manner. Details are as follows:

The DRX configuration information carries a default index, and the default index is a configuration index of the default configuration.

Alternatively, the DRX configuration information includes the M DRX configurations, each of the M DRX configurations includes an index, and the index is used to indicate whether the DRX configuration is the default configuration. The index in the default configuration is a default value, and the index in the rest of the DRX configurations is not the default value.

Alternatively, the default configuration includes the index described in the foregoing paragraph, the index is a default value, and the rest of the DRX configurations does not include the index.

For a specific implementation of determining the default configuration by the network device, refer to corresponding content described in the embodiment shown in FIG. 1. Details are not described herein again.

In this embodiment, after receiving the configuration information, the terminal device may further perform a corresponding operation based on an indication of the network device. This may specifically include the following several cases:

### First case:

The network device and the terminal device may further agree upon "configuration as activation" in advance. That is, the terminal device performs a DRX operation when receiving the DRX configuration information.

Optionally, the terminal device may perform the DRX operation based on a default configuration. Optionally, the terminal device may perform the DRX operation based on a specified DRX configuration.

### Second case:

The network device and the terminal device may further agree upon "configuration as deactivation" in advance. That is, the terminal device stores the M DRX configurations when receiving the DRX configuration information.

In the first case and the second case, the network device implicitly instructs the terminal device to perform the corresponding operation.

### Third case:

The DRX configuration information received by the terminal device carries a DRX state option, and the DRX state option is used by the terminal device to perform, when receiving the DRX configuration information, an operation corresponding to the DRX state option.

The DRX state option may include activation or deactivation. If the DRX state option includes activation, the terminal device performs a DRX operation based on the DRX state option when receiving the DRX configuration information.

Optionally, the terminal device may perform the DRX operation based on a default configuration. Optionally, the terminal device may perform the DRX operation based on a specified DRX configuration.

If the DRX state option includes deactivation, the terminal device stores the M DRX configurations based on the DRX state option when receiving the DRX configuration information.

### Fourth case:

The DRX configuration information received by the terminal device carries operation indication information, and the operation indication information is used to indicate that the terminal device performs at least one of the following operations after receiving the DRX configuration information: activating a DRX state at a first occasion, or performing a deactivation operation at a second occasion.

Specifically, after receiving the DRX configuration information that carries the operation indication information, the terminal device may perform one of the following operations:
performing a DRX operation at the first occasion, where
optionally, the terminal device may perform the DRX operation based on a default configuration, or optionally, the terminal device may perform the DRX operation based on a specified DRX configuration;
storing the plurality of DRX configurations at the second occasion;
performing, at the second occasion, the deactivation operation on a DRX configuration of the second occasion, and performing a DRX operation at the first occasion, where the first occasion is later than the second occasion; or
performing a DRX operation at the first occasion, and performing, at the second occasion, the deactivation operation on a DRX configuration of the second occasion, where the second occasion is later than the first occasion.

For specific implementations of the foregoing steps, refer to specific implementations of corresponding steps in the embodiment shown in FIG. 1. Details are not described herein again.

In this embodiment, the terminal device may further receive condition information from the network device, where the condition information is used by the terminal device to automatically resume a specified DRX configuration.

Optionally, the specified DRX configuration may be a power saving configuration for the terminal device in the plurality of DRX configurations. In this way, the terminal device can save electricity of the terminal device by automatically resuming the specified DRX configuration.

Optionally, the specified DRX configuration may be alternatively a default configuration.

In this embodiment, the condition information may be preset duration. In this case, the terminal device may perform the following operation after receiving the automatic-resume condition information:
resuming the specified DRX configuration when first duration is greater than or equal to the preset duration; or
resuming the specified DRX configuration at the start of the first DRX cycle after accumulative timing of first duration stops, where the first duration is accumulated duration during which the terminal device does not have uplink or downlink data transmission.

The condition information may be alternatively a preset DRX cycle number. In this case, the terminal device may perform the following operation after receiving the automatic-resume condition information:
resuming the specified DRX configuration when the number of DRX cycles included in first duration is greater than or equal to the preset DRX cycle number; or
resuming the specified DRX configuration at the start of the first DRX cycle after accumulative timing of first duration stops, where the first duration is accumulated duration during which the terminal device does not have uplink or downlink data transmission.

It should be noted that, when configuring the condition information for the terminal device, the network device may uniformly perform the configuration, that is, different DRX configurations correspond to same condition information; or may separately perform the configuration, that is, different DRX configurations correspond to different condition information. This is not specifically limited herein.

In this embodiment, the terminal device may further delete, retain, or update the M DRX configurations based on an indication of the network device.

An implementation of retaining or updating the M DRX configurations by the terminal device is as follows:

After receiving the DRX configuration information, the terminal device may receive reconfiguration indication information from the network device, where the reconfiguration indication information is used to reconfigure the M DRX configurations.

The reconfiguration may be full configuration. In this case, the reconfiguration indication information further includes N DRX configurations, where N is an integer greater than or equal to 1. In this way, the terminal device can update the M DRX configurations with the N DRX configurations based on the reconfiguration indication information.

Alternatively, the reconfiguration may be incremental configuration. In this case, the reconfiguration indication information may further include L DRX configurations, where L is an integer greater than or equal to 1. In this way, the terminal device can update the M DRX configurations with the L DRX configurations based on the reconfiguration indication information.

In an implementation, the L DRX configurations may be a newly added configuration. To be specific, the M DRX configurations are retained by default, and based on this, the L DRX configurations are added. In this case, the terminal device adds the L DRX configurations to the M DRX configurations after receiving the reconfiguration indication information.

In another implementation, when the reconfiguration is incremental configuration, and the L DRX configurations are not a newly added DRX configuration, the reconfiguration indication information may further include at least one of a first configuration index or a second configuration index. The first configuration index is a configuration index corresponding to a to-be-retained DRX configuration in the M DRX configurations, and the second configuration index is a configuration index corresponding to a to-be-updated DRX configuration in the M DRX configurations.

In this case, the terminal device may perform at least one of the following operations after receiving the reconfiguration indication information:
retaining the DRX configuration corresponding to the first configuration index in the M DRX configurations; or
updating, based on the L DRX configurations, the DRX configuration corresponding to the second configuration index in the M DRX configurations.

For a specific implementation, refer to a specific implementation of a corresponding step described in the embodiment shown in FIG. 1. Details are not described herein again.

An implementation of deleting the M DRX configurations by the terminal device is as follows:

After receiving the DRX configuration information, the terminal device may further receive deconfiguration indication information from the network device, where the deconfiguration indication information is used to deconfigure at least one of the M DRX configurations.

Specifically, the deconfiguration indication information may include a third configuration index, and the third configuration index is a configuration index corresponding to a to-be-deleted DRX configuration in the M DRX configurations. In this way, after receiving the deconfiguration indication information, the terminal device can delete the DRX configuration corresponding to the third configuration index in the M DRX configurations.

It should be noted that, for detailed descriptions of each part of content described in the embodiment shown in FIG. 2, reference may be made to corresponding content described in the embodiment shown in FIG. 1. Details are not described herein again.

According to the technical solutions provided in this embodiment of this disclosure, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

Specific embodiments of this specification are described above. Other embodiments fall within the scope of the appended claims. In some cases, actions or steps described in the claims may be performed in a sequence different from that in the embodiments and a desired result can still be achieved. In addition, a process depicted in the accompanying drawings does not necessarily need to be performed in a shown specific sequence or consecutive sequence to achieve the desired result. In some implementations, multitask processing and parallel processing are also feasible or may be advantageous.

FIG. 3 is a schematic structural diagram of a network device according to an embodiment of this disclosure. The network device includes a sending module 31.

The sending module 31 is configured to send discontinuous reception DRX configuration information to a terminal device, where the DRX configuration information is used by the terminal device to determine M DRX configurations, and M is an integer greater than or equal to 2.

Optionally, the DRX configuration information includes at least a first DRX configuration and a second DRX configuration, the second DRX configuration includes some or all of DRX parameters in the first DRX configuration, and configured values of the some or all of the DRX parameters in the first DRX configuration are different from those in the second DRX configuration.

Optionally, the second DRX configuration further includes a configured value of a DRX parameter other than the DRX parameters in the first DRX configuration.

Optionally, the DRX configuration information includes at least a first DRX configuration and a second DRX configuration, and the second DRX configuration includes no DRX parameter in the first DRX configuration, and includes configured values of DRX parameters other than DRX parameters in the first DRX configuration.

Optionally, the DRX configuration information includes at least a first DRX configuration and a second DRX configuration, the second DRX configuration includes invalidity indication information, and the invalidity indication information is used to indicate that a first part of DRX parameters in the first DRX configuration is invalid in the second DRX configuration.

Optionally, the second DRX configuration further includes a second part of DRX parameters in the first DRX configuration, and configured values of the second part of DRX parameters in the first DRX configuration are different from those in the second DRX configuration.

Optionally, the DRX configuration information includes at least a first DRX configuration and a second DRX configuration, and DRX parameters included in the first DRX configuration are the same as or are different from DRX parameters included in the second DRX configuration.

Optionally, the DRX configuration information includes one first parameter set and M second parameter sets.

The first parameter set includes a configured value of a fixed DRX parameter, the second parameter set includes a configured value of a variable DRX parameter, and different second parameter sets include different configured values of the variable DRX parameter.

Optionally, there is an association relationship between target DRX parameters in the M DRX configurations and an active resource set.

The target DRX parameter is a DRX parameter used by the terminal device when performing a DRX operation on the active resource set, and the active resource set includes a carrier or a bandwidth part BWP.

Optionally, the DRX configuration information includes the M DRX configurations, and each DRX configuration carries a configuration index; or
the DRX configuration information includes one first parameter set and M second parameter sets, and each second parameter set carries a sub configuration index, where
the first parameter set includes a configured value of a fixed DRX parameter, the second parameter set includes a configured value of a variable DRX parameter, and different second parameter sets include different configured values of the variable DRX parameter.

Optionally, the DRX configuration information includes the M DRX configurations, and there is a mapping relationship between locations of the DRX configurations in RRC signaling and configuration indices.

Optionally, a default configuration is included in the plurality of DRX configurations, and the default configuration is used by the terminal device to perform a DRX operation when activating a DRX state.

Optionally, the DRX configuration information includes the M DRX configurations, and the default configuration is the first of the M DRX configurations that is present in RRC signaling; or
the default configuration is a DRX configuration in the M DRX configurations that corresponds to a specified configuration index.

Optionally, the DRX configuration information carries a default index, and the default index is a configuration index of the default configuration; or
the DRX configuration information includes the M DRX configurations, each of the M DRX configurations includes an index, the index is used to indicate whether the DRX configuration is the default configuration, the index in the default configuration is a default value, and the index in the rest of the DRX configurations is not the default value; or
the default configuration includes an index, the index is a default value, and the rest of the DRX configurations does not include the index.

Optionally, the DRX configuration information carries a DRX state option, and the DRX state option is used by the terminal device to perform, when receiving the DRX configuration information, an operation corresponding to the DRX state option.

Optionally, the DRX state option includes activation, and the DRX state option is used by the terminal device to perform a DRX operation when receiving the DRX configuration information; or
the DRX state option includes deactivation, and the DRX state option is used by the terminal device to store the M DRX configurations when receiving the DRX configuration information.

Optionally, the DRX configuration information carries operation indication information, and the operation indication information is used to indicate that the terminal device performs at least one of the following operations after receiving the DRX configuration information: activating a DRX state at a first occasion, or performing a deactivation operation at a second occasion.

Optionally, the sending module 31 further sends condition information to the terminal device, where the condition information is used by the terminal device to automatically resume a specified DRX configuration.

Optionally, the condition information includes preset duration or a preset DRX cycle number.

The preset duration is used by the terminal device to resume the specified DRX configuration when first duration is greater than or equal to the preset duration, or resume the specified DRX configuration at the start of the first DRX cycle after accumulative timing of first duration stops. The first duration is accumulated duration during which the terminal device does not have uplink or downlink data transmission.

The preset DRX cycle number is used by the terminal device to resume the specified DRX configuration when the number of DRX cycles included in the first duration is greater than or equal to the preset DRX cycle number, or resume the specified DRX configuration at the start of the first DRX cycle after accumulative timing of the first duration stops.

Optionally, after sending the DRX configuration information to the terminal device, the sending module 31 further sends reconfiguration indication information to the terminal device. The reconfiguration indication information is used to reconfigure the M DRX configurations.

Optionally, the reconfiguration includes full configuration, and the reconfiguration indication information includes N DRX configurations, where N is an integer greater than or equal to 1; or
the reconfiguration includes incremental configuration, and the reconfiguration indication information includes L DRX configurations, where L is an integer greater than or equal to 1.

Optionally, the reconfiguration includes incremental configuration, and the reconfiguration indication information further includes at least one of a first configuration index or a second configuration index.

The first configuration index is a configuration index corresponding to a to-be-retained DRX configuration in the M DRX configurations, and the second configuration index is a configuration index corresponding to a to-be-updated DRX configuration in the M DRX configurations.

Optionally, after sending the DRX configuration information to the terminal device, the sending module 31 further sends deconfiguration indication information to the terminal device. The deconfiguration indication information is used to deconfigure at least one of the M DRX configurations.

Optionally, the deconfiguration indication information includes a third configuration index, and the third configuration index is a configuration index corresponding to a to-be-deleted DRX configuration in the M DRX configurations.

Optionally, one DRX configuration includes a plurality of parameter sets, one parameter set includes a configured value of at least one DRX parameter, and each parameter set corresponds to a set index.

The network device provided in this embodiment of this disclosure can implement each process implemented by the network device in the method embodiment in FIG. 1. To avoid repetition, details are not described herein again. In this embodiment of this disclosure, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

FIG. 4 is a schematic structural diagram of a terminal device according to an embodiment of this disclosure. The terminal device includes a receiving module 41.

The receiving module 41 is configured to receive DRX configuration information from a network device, where the DRX configuration information is used by the terminal device to determine M DRX configurations, and M is an integer greater than or equal to 2.

Optionally, the DRX configuration information includes at least a first DRX configuration and a second DRX configuration, the second DRX configuration includes some or all of DRX parameters in the first DRX configuration, and configured values of the some or all of the DRX parameters in the first DRX configuration are different from those in the second DRX configuration.

Optionally, the second DRX configuration further includes a configured value of a DRX parameter other than the DRX parameters in the first DRX configuration.

Optionally, the DRX configuration information includes at least a first DRX configuration and a second DRX configuration, and the second DRX configuration includes no DRX parameter in the first DRX configuration, and includes configured values of DRX parameters other than DRX parameters in the first DRX configuration.

Optionally, the DRX configuration information includes at least a first DRX configuration and a second DRX configuration, the second DRX configuration includes invalidity indication information, and the invalidity indication information is used to indicate that a first part of DRX parameters in the first DRX configuration is invalid in the second DRX configuration.

Optionally, the second DRX configuration further includes a second part of DRX parameters in the first DRX configuration, and configured values of the second part of DRX parameters in the first DRX configuration are different from those in the second DRX configuration.

Optionally, the terminal device further includes a processing module 42.

When performing a DRX operation based on the second DRX configuration, if determining to reuse a configured value, of a specified DRX parameter, in the first DRX configuration, the processing module 42 performs the DRX operation based on the configured value of the specified DRX parameter and a configured value, of a DRX parameter, included in the second DRX configuration.

Optionally, the DRX configuration information includes at least a first DRX configuration and a second DRX configuration, and DRX parameters included in the first DRX configuration are the same as or are different from DRX parameters included in the second DRX configuration.

Optionally, the DRX configuration information includes one first parameter set and M second parameter sets.

The first parameter set includes a configured value of a fixed DRX parameter, the second parameter set includes a configured value of a variable DRX parameter, and different second parameter sets include different configured values of the variable DRX parameter.

Optionally, the processing module 42 performs a DRX operation based on the configured value of the fixed DRX parameter in the first parameter set and a configured value of a variable DRX parameter in a second parameter set corresponding to a specified sub configuration index.

Optionally, after the receiving module 41 receives the DRX configuration information, the processing module 42 performs a DRX operation on an active resource set by using a target DRX parameter in the M DRX configurations. There is an association relationship between the target DRX parameters and the active resource set, and the active resource set includes a carrier or a BWP.

Optionally, the DRX configuration information includes the M DRX configurations, and each DRX configuration carries a configuration index; or
the DRX configuration information includes one first parameter set and M second parameter sets, and each second parameter set carries a sub configuration index, where
the first parameter set includes a configured value of a fixed DRX parameter, the second parameter set includes a configured value of a variable DRX parameter, and different second parameter sets include different configured values of the variable DRX parameter.

Optionally, the DRX configuration information includes the M DRX configurations, and there is a mapping relationship between locations of the DRX configurations in RRC signaling and configuration indices.

Optionally, a default configuration is included in the plurality of DRX configurations, and the default configuration is used by the terminal device to perform a DRX operation when activating a DRX state.

Optionally, the DRX configuration information includes the M DRX configurations, and the default configuration is the first of the M DRX configurations that is present in RRC signaling; or
the default configuration is a DRX configuration in the M DRX configurations that corresponds to a specified configuration index.

Optionally, the DRX configuration information carries a default index, and the default index is a configuration index of the default configuration; or
the DRX configuration information includes the M DRX configurations, each of the M DRX configurations includes an index, the index is used to indicate whether the DRX configuration is the default configuration, the index in the default configuration is a default value, and the index in the rest of the DRX configurations is not the default value; or
the default configuration includes an index, the index is a default value, and the rest of the DRX configurations does not include the index.

Optionally, the processing module 42 performs a DRX operation when the receiving module 41 receives the DRX configuration information.

Optionally, the processing module 42 stores the M DRX configurations when the receiving module 41 receives the DRX configuration information.

Optionally, the DRX configuration information carries a DRX state option, and the DRX state option is used by the terminal device to perform, when receiving the DRX configuration information, an operation corresponding to the DRX state option.

Optionally, the DRX state option includes activation, and the processing module 42 performs a DRX operation based on the DRX state option when the receiving module 41 receives the DRX configuration information; or
the DRX state option is deactivation, and the processing module 42 stores the M DRX configurations based on the DRX state option when the receiving module 31 receives the DRX configuration information.

Optionally, the DRX configuration information carries operation indication information, and the operation indication information is used to indicate that the terminal device performs at least one of the following operations after receiving the DRX configuration information: activating a DRX state at a first occasion, or performing a deactivation operation at a second occasion.

Optionally, after the receiving module 41 receives the DRX configuration information, the processing module 42 performs a DRX operation at the first occasion; or
stores the plurality of DRX configurations at the second occasion; or
performs, at the second occasion, the deactivation operation on a DRX configuration of the second occasion, and performs a DRX operation at the first occasion, where the first occasion is later than the second occasion; or
performs a DRX operation at the first occasion, and performs, at the second occasion, the deactivation operation on a DRX configuration of the second occasion, where the second occasion is later than the first occasion.

Optionally, the M DRX configurations include a default configuration, and the default configuration is used by the terminal device to perform a DRX operation when activating a DRX state.

The performing a DRX operation by the processing module 42 includes:
performing the DRX operation based on the default configuration.

Optionally, the receiving module 42 receives condition information from the network device, where the condition information is used by the terminal device to automatically resume a specified DRX configuration.

Optionally, the condition information includes preset duration.

After the receiving module 42 receives the automatic-resume condition information, the processing module 42 resumes the specified DRX configuration when first duration is greater than or equal to the preset duration, or resumes the specified DRX configuration at the start of the first DRX cycle after accumulative timing of first duration stops, where the first duration is accumulated duration during which the terminal device does not have uplink or downlink data transmission.

Optionally, the condition information includes a preset DRX cycle number.

After the receiving module 41 receives the automatic-resume condition information, the processing module 42 further performs the following operation:
resuming the specified DRX configuration when the number of DRX cycles included in first duration is greater than or equal to the preset DRX cycle number; or
resuming the specified DRX configuration at the start of the first DRX cycle after accumulative timing of first duration stops, where the first duration is accumulated duration during which the terminal device does not have uplink or downlink data transmission.

Optionally, after receiving the DRX configuration information, the receiving module 41 receives reconfiguration indication information from the network device, where the reconfiguration indication information is used to reconfigure the M DRX configurations.

Optionally, the reconfiguration includes full configuration, and the reconfiguration indication information includes N DRX configurations, where N is an integer greater than or equal to 1.

The processing module 42 updates the M DRX configurations with the N DRX configurations after the receiving module 41 receives the reconfiguration indication information.

Optionally, the reconfiguration includes incremental configuration, and the reconfiguration indication information includes L DRX configurations, where L is an integer greater than or equal to 1.

The processing module 42 adds the L DRX configurations on a basis of the M DRX configurations after the receiving module 41 receives the reconfiguration indication information.

Optionally, the reconfiguration indication information further includes at least one of a first configuration index or a second configuration index, the first configuration index is a configuration index corresponding to a to-be-retained DRX configuration in the M DRX configurations, and the second configuration index is a configuration index corresponding to a to-be-updated DRX configuration in the M DRX configurations.

After the receiving module 41 receives the reconfiguration indication information, the processing module 42 performs at least one of the following operations:
retaining the DRX configuration corresponding to the first configuration index in the M DRX configurations; or
updating, based on the L DRX configurations, the DRX configuration corresponding to the second configuration index in the M DRX configurations.

After receiving the DRX configuration information, the receiving module 41 receives deconfiguration indication information from the network device, where the deconfiguration indication information is used to deconfigure at least one of the M DRX configurations.

Optionally, the deconfiguration indication information includes a third configuration index, and the third configuration index is a configuration index corresponding to a to-be-deleted DRX configuration in the M DRX configurations.

After the receiving module 41 receives the deconfiguration indication information, the processing module 42 deletes the DRX configuration corresponding to the third configuration index in the M DRX configurations.

Optionally, one DRX configuration includes a plurality of parameter sets, one parameter set includes a configured value of at least one DRX parameter, and each parameter set corresponds to a set index.

The terminal device provided in this embodiment of this disclosure can implement each process implemented by the terminal device in the method embodiment in FIG. 2. To avoid repetition, details are not described herein again. In this embodiment of this disclosure, the network device can configure a plurality of DRX configurations for the terminal device, and therefore, the network device can flexibly select a suitable DRX configuration based on a current service characteristic or battery status of the terminal device, so as to better adapt to a service transmission requirement of the terminal device, and save electricity of the terminal device. This improves battery efficiency and user experience.

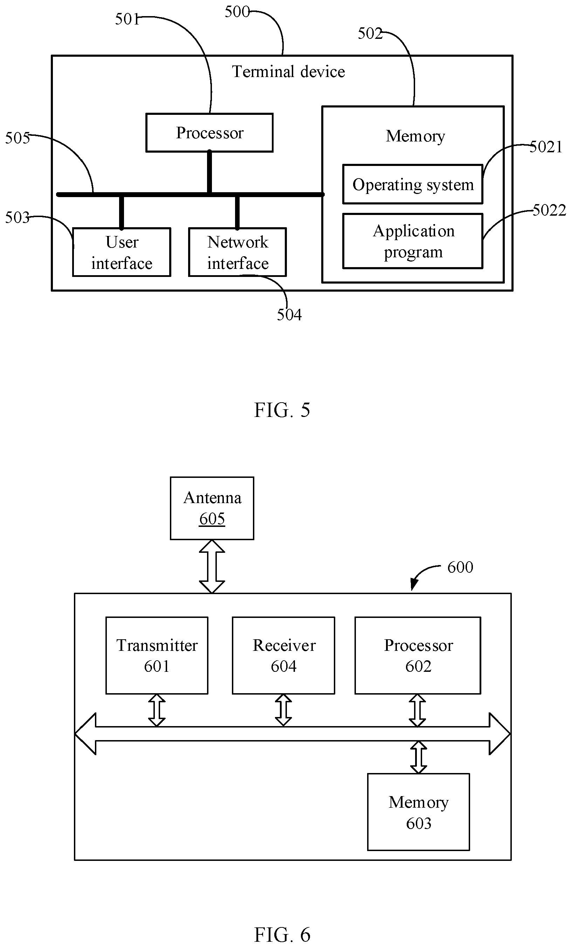

In the embodiments of this disclosure, a communications device may include a network device and a terminal device. When the communications device is a terminal device, the communications device is shown in FIG. 5. FIG. 5 is a schematic structural diagram of a terminal device according to an embodiment of this disclosure. The terminal device 500 shown in FIG. 5 includes at least one processor 501, a memory 502, at least one network interface 504, and a user interface 503. The various components in the mobile terminal 500 are coupled together through a bus system 505. It can be understood that the bus system 505 is used to implement connection and communication between these components. In addition to a data bus, the bus system 505 further includes a power bus, a control bus, and a status signal bus. However, for clarity of description, various buses are all marked as the bus system 505 in FIG. 5.

The user interface 503 may include a display, a keyboard, a clicking device (for example, a mouse or a trackball (trackball)), a touch panel or a touchscreen, or the like.

It can be understood that the memory 502 in this embodiment of this disclosure may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 502 in the system and method described in this embodiment of this disclosure is intended to include but is not limited to these and any other suitable types of memories.

In some embodiments, the memory 502 stores the following elements: executable modules or data structures, or a subset thereof, or an extended set thereof: an operating system 5021 and an application program 5022.

The operating system 5021 includes various system programs, such as a framework layer, a core library layer, and a driver layer, for implementing various basic services and processing hardware-based tasks. The application program 5022 includes various application programs, such as a media player (Media Player) and a browser (Browser), which are used to implement various application services. A program for implementing the method in the embodiments of this disclosure may be included in the application program 5022.

In this embodiment of this disclosure, the terminal device 500 further includes a computer program stored in the memory 502 and capable of running on the processor 501. When being executed by the processor 501, the computer program implements the following steps:
receiving DRX configuration information from a network device, where the DRX configuration information is used by the terminal device to determine M DRX configurations, and M is an integer greater than or equal to 2.

The method disclosed in FIG. 2 in the foregoing embodiments of this disclosure may be applied to the processor 501 or implemented by the processor 501. The processor 501 may be an integrated circuit chip, having a signal processing capability. In an implementation process, the steps of the foregoing method may be implemented by an integrated logic circuit of hardware in the processor 501, or by using instructions in a form of software. The processor 501 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, steps, and logical block diagrams disclosed in the embodiments of this disclosure. The general purpose processor may be a microprocessor, or the processor may be any conventional processor or the like. The steps of the method disclosed with reference to the embodiments of this disclosure may be directly executed and completed by a hardware decoding processor, or executed and completed by a combination of hardware in a decoding processor and a software module. The software module may be located in a computer-readable storage medium mature in the art, such as a random access memory, a flash memory, a read-only memory, a programmable read-only memory or an electrically erasable programmable memory, or a register. The computer-readable storage medium is located in the memory 502, and the processor 501 reads information in the memory 502, and completes the steps of the foregoing method in combination with hardware of the processor. Specifically, the computer-readable storage medium stores a computer program, and when the computer program is executed by the processor 501, the steps in the foregoing embodiments of the method for indicating information are implemented.

It can be understood that the embodiments described in the embodiments of this disclosure may be implemented by hardware, software, firmware, middleware, microcode, or a combination thereof. For hardware implementation, a processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field programmable gate arrays (Field-Programmable Gate Array, FPGA), general purpose processors, controllers, microcontrollers, microprocessors, other electronic units for performing the functions described in this disclosure, or a combination thereof.

For software implementation, the techniques described in the embodiments of this disclosure may be implemented by modules (for example, procedures or functions) that perform the functions described in the embodiments of this disclosure. Software code may be stored in the memory and executed by the processor. The memory may be implemented in or outside the processor.

The terminal device 500 can implement each process implemented by the terminal device in the foregoing embodiments. To avoid repetition, details are not described herein again.

An embodiment of this disclosure further proposes a computer-readable storage medium. The computer-readable storage medium stores one or more programs. The one or more programs include instructions. When the instructions are executed by a communications device including a plurality of application programs, the communications device is enabled to perform the method in the embodiment shown in FIG. 2, and specifically to perform the steps of the foregoing described method for configuring information.

When the communications device is a network device, the communications device is shown in FIG. 6. FIG. 6 is a schematic structural diagram of a network device according to an embodiment of this disclosure. A schematic diagram of a physical apparatus structure of the network device 600 may be that shown in FIG. 6, including a processor 602, a memory 603, a transmitter 601, and a receiver 604. In specific application, the transmitter 601 and the receiver 604 may be coupled to an antenna 605.

The memory 603 is configured to store a program. Specifically, the program may include program code, and the program code includes computer operation instructions. The memory 603 may include a read-only memory and a random access memory, and provides instructions and data to the processor 602. The memory 603 may include a high-speed RAM memory, and may also include a non-volatile memory (non-volatile memory), for example, at least one disk memory.

The processor 602 executes the program stored in the memory 603.

Specifically, in the network device 600, the processor 602 may perform the following method:
sending discontinuous reception DRX configuration information to a terminal device, where the DRX configuration information is used by the terminal device to determine M DRX configurations, and M is an integer greater than or equal to 2.

The method that is disclosed in the embodiment shown in FIG. 1 of this disclosure and that is performed by the network device 600 may be applied to the processor 602 or implemented by the processor 602. The processor 602 may be an integrated circuit chip, having a signal processing capability. In an implementation process, the steps of the foregoing method may be implemented by an integrated logic circuit of hardware in the processor 602, or by using instructions in a form of software. The processor 602 may be a general purpose processor, including a central processing unit (Central Processing Unit, CPU), a network processor (Network Processor, NP), or the like; or may be a digital signal processor (DSP), an application-specific integrated circuit (ASIC), a field programmable gate array (FPGA) or another programmable logic device, a discrete gate or transistor logic device, or a discrete hardware component. The processor may implement or perform the methods, steps, and logical block diagrams disclosed in the embodiments of this disclosure. The general purpose processor may be a microprocessor, or the processor may be any conventional processor or the like. The steps of the method disclosed with reference to the embodiments of this disclosure may be directly executed and completed by a hardware decoding processor, or executed and completed by a combination of hardware in a decoding processor and a software module. The software module may be located in a storage medium mature in the art, such as a random access memory, a flash memory, a read-only memory, a programmable read-only memory or an electrically erasable programmable memory, or a register. The storage medium is located in the memory 603, and the processor 602 reads information in the memory 603, and completes the steps of the foregoing method in combination with hardware of the processor.

The network device may further perform the method shown in FIG. 1 and implement the functions of the network device in the embodiment shown in FIG. 1. Details are not described herein again in this embodiment of this disclosure.

An embodiment of this disclosure further proposes a computer-readable storage medium. The computer-readable storage medium stores one or more programs. The one or more programs include instructions. When the instructions are executed by a communications device including a plurality of application programs, the communications device is enabled to perform the method in the embodiment shown in FIG. 1, and specifically to perform the steps of the foregoing described method for configuring information.

In short, the foregoing descriptions are merely examples of embodiments of this disclosure, and are not intended to limit the protection scope of this disclosure. Any modification, equivalent replacement, improvement, and the like made within the spirit and principle of this disclosure shall fall within the protection scope of this disclosure.

The systems, apparatuses, modules, or units explained in the foregoing embodiments may be specifically implemented by a computer chip or entity, or implemented by a product having a particular function. Atypical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or any combination of these devices.

Computer-readable media include permanent and non-permanent, removable and non-removable media, and information storage may be implemented by using any method or technology. The information may be computer-readable instructions, a data structure, a program module, or other data. Examples of computer storage media include but are not limited to a phase change memory (PRAM), a static random access memory (SRAM), a dynamic random access memory (DRAM) or another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic tape, a magnetic disk storage or another magnetic storage device, or any other non-transmission media, which can be used to store information that can be accessed by a computing device. As defined in this specification, the computer-readable media do not include transitory computer-readable media (transitory media), such as a modulated data signal and carrier.

It should be noted that the terms "include" and "comprise" or any variants thereof are intended to cover a non-exclusive inclusion, so that a process, a method, an article, or an apparatus that includes a list of elements not only includes those elements but also includes other elements that are not explicitly listed, or further includes elements inherent to the process, method, article, or apparatus. In absence of more constraints, an element preceded by "includes a..." does not preclude existence of other identical elements in the process, method, article, or apparatus that includes the element.

According to the descriptions of the foregoing implementations, a person skilled in the art can clearly understand that the method in the foregoing embodiments may be implemented by using software on a necessary universal hardware platform, or certainly may be implemented by hardware only. In most cases, the former is a more preferred implementation though. Based on such an understanding, the technical solutions of this disclosure essentially or the part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The embodiments of this disclosure are described above with reference to the accompanying drawings, but this disclosure is not limited to the foregoing specific implementations. The foregoing specific implementations are merely illustrative rather than restrictive. Inspired by this disclosure, a person of ordinary skill in the art can further derive many variations without departing from the essence of this disclosure and the protection scope of the claims. All these variations shall fall within the protection of this disclosure.

## Claims

1. A method for configuring information, applied to a network device and comprising:
sending discontinuous reception DRX configuration information to a terminal device, wherein the DRX configuration information is used by the terminal device to determine M DRX configurations, and M is an integer greater than or equal to 2.

2. The method according to claim 1, wherein
the DRX configuration information comprises at least a first DRX configuration and a second DRX configuration, the second DRX configuration comprises some or all of DRX parameters in the first DRX configuration, and configured values of the some or all of the DRX parameters in the first DRX configuration are different from those in the second DRX configuration.

3. The method according to claim 2, wherein
the second DRX configuration further comprises a configured value of a DRX parameter other than the DRX parameters in the first DRX configuration.

4. The method according to claim 1, wherein
the DRX configuration information comprises at least a first DRX configuration and a second DRX configuration, and the second DRX configuration comprises no DRX parameter in the first DRX configuration, and comprises configured values of DRX parameters other than DRX parameters in the first DRX configuration.

5. The method according to claim 1, wherein
the DRX configuration information comprises at least a first DRX configuration and a second DRX configuration, the second DRX configuration comprises invalidity indication information, and the invalidity indication information is used to indicate that a first part of DRX parameters in the first DRX configuration are invalid in the second DRX configuration.

6. The method according to claim 5, wherein
the second DRX configuration further comprises a second part of DRX parameters in the first DRX configuration, and configured values of the second part of DRX parameters in the first DRX configuration are different from those in the second DRX configuration.

7. The method according to claim 1, wherein
the DRX configuration information comprises at least a first DRX configuration and a second DRX configuration, and DRX parameters comprised in the first DRX configuration are the same as or are different from DRX parameters comprised in the second DRX configuration.

8. The method according to claim 1, wherein
the DRX configuration information comprises one first parameter set and M second parameter sets, wherein
the first parameter set comprises a configured value of a fixed DRX parameter, the second parameter set comprises a configured value of a variable DRX parameter, and different second parameter sets comprise different configured values of the variable DRX parameter.

9. The method according to claim 1, wherein
there is an association relationship between target DRX parameters in the M DRX configurations and an active resource set; and
the target DRX parameter is a DRX parameter used by the terminal device when performing a DRX operation on the active resource set, and the active resource set comprises a carrier or a bandwidth part BWP.

10. The method according to claim 1, wherein
the DRX configuration information comprises the M DRX configurations, and each DRX configuration carries a configuration index; or
the DRX configuration information comprises one first parameter set and M second parameter sets, and each second parameter set carries a sub configuration index, wherein
the first parameter set comprises a configured value of a fixed DRX parameter, the second parameter set comprises a configured value of a variable DRX parameter, and different second parameter sets comprise different configured values of the variable DRX parameter.

11. The method according to claim 1, wherein
the DRX configuration information comprises the M DRX configurations, and there is a mapping relationship between locations of the DRX configurations in RRC signaling and configuration indices.

12. The method according to claim 1, wherein
a default configuration is comprised in the plurality of DRX configurations, and the default configuration is used by the terminal device to perform a DRX operation when activating a DRX state.

13. The method according to claim 12, wherein
the DRX configuration information comprises the M DRX configurations, and the default configuration is the first of the M DRX configurations that is present in RRC signaling; or
the default configuration is a DRX configuration in the M DRX configurations that corresponds to a specified configuration index.

14. The method according to claim 12, wherein
the DRX configuration information carries a default index, and the default index is a configuration index of the default configuration; or
the DRX configuration information comprises the M DRX configurations, each of the M DRX configurations comprises an index, the index is used to indicate whether the DRX configuration is the default configuration, the index in the default configuration is a default value, and the index in the rest of the DRX configurations is not the default value; or
the default configuration comprises an index, the index is a default value, and the rest of the DRX configurations does not comprise the index.

15. The method according to claim 1, wherein
the DRX configuration information carries a DRX state option, and the DRX state option is used by the terminal device to perform, when receiving the DRX configuration information, an operation corresponding to the DRX state option.

16. The method according to claim 15, wherein
the DRX state option comprises activation, and the DRX state option is used by the terminal device to perform a DRX operation when receiving the DRX configuration information; or
the DRX state option comprises deactivation, and the DRX state option is used by the terminal device to store the M DRX configurations when receiving the DRX configuration information.

17. The method according to claim 1, wherein
the DRX configuration information carries operation indication information, and the operation indication information is used to indicate that the terminal device performs at least one of the following operations after receiving the DRX configuration information: activating a DRX state at a first occasion, or performing a deactivation operation at a second occasion.

18. The method according to claim 1, further comprising:
sending condition information to the terminal device, wherein the condition information is used by the terminal device to automatically resume a specified DRX configuration.

19. The method according to claim 18, wherein
the condition information comprises preset duration or a preset DRX cycle number, wherein
the preset duration is used by the terminal device to resume the specified DRX configuration when first duration is greater than or equal to the preset duration, or resume the specified DRX configuration at the start of the first DRX cycle after accumulative timing of first duration stops, and the first duration is accumulated duration during which the terminal device does not have uplink or downlink data transmission; and
the preset DRX cycle number is used by the terminal device to resume the specified DRX configuration when the number of DRX cycles comprised in the first duration is greater than or equal to the preset DRX cycle number, or resume the specified DRX configuration at the start of the first DRX cycle after accumulative timing of the first duration stops.

20. The method according to claim 1, wherein after the sending DRX configuration information to a terminal device, the method further comprises:
sending reconfiguration indication information to the terminal device, wherein the reconfiguration indication information is used to reconfigure the M DRX configurations.

21. The method according to claim 20, wherein
the reconfiguration comprises full configuration, and the reconfiguration indication information comprises N DRX configurations, wherein N is an integer greater than or equal to 1; or
the reconfiguration comprises incremental configuration, and the reconfiguration indication information comprises L DRX configurations, wherein L is an integer greater than or equal to 1.

22. The method according to claim 21, wherein
the reconfiguration comprises incremental configuration, and the reconfiguration indication information further comprises at least one of a first configuration index or a second configuration index, wherein
the first configuration index is a configuration index corresponding to a to-be-retained DRX configuration in the M DRX configurations, and the second configuration index is a configuration index corresponding to a to-be-updated DRX configuration in the M DRX configurations.

23. The method according to claim 1, wherein after the sending DRX configuration information to a terminal device, the method further comprises:
sending deconfiguration indication information to the terminal device, wherein the deconfiguration indication information is used to deconfigure at least one of the M DRX configurations.

24. The method according to claim 23, wherein
the deconfiguration indication information comprises a third configuration index, and the third configuration index is a configuration index corresponding to a to-be-deleted DRX configuration in the M DRX configurations.

25. The method according to claim 1, wherein
one DRX configuration comprises a plurality of parameter sets, one parameter set comprises a configured value of at least one DRX parameter, and each parameter set corresponds to a set index.

26. A method for configuring information, applied to a terminal device and comprising:
receiving DRX configuration information from a network device, wherein the DRX configuration information is used by the terminal device to determine M DRX configurations, and M is an integer greater than or equal to 2.

27. The method according to claim 26, wherein
the DRX configuration information comprises at least a first DRX configuration and a second DRX configuration, the second DRX configuration comprises some or all of DRX parameters in the first DRX configuration, and configured values of the some or all of the DRX parameters in the first DRX configuration are different from those in the second DRX configuration.

28. The method according to claim 27, wherein
the second DRX configuration further comprises a configured value of a DRX parameter other than the DRX parameters in the first DRX configuration.

29. The method according to claim 26, wherein
the DRX configuration information comprises at least a first DRX configuration and a second DRX configuration, and the second DRX configuration comprises no DRX parameter in the first DRX configuration, and comprises configured values of DRX parameters other than DRX parameters in the first DRX configuration.

30. The method according to claim 26, wherein
the DRX configuration information comprises at least a first DRX configuration and a second DRX configuration, the second DRX configuration comprises invalidity indication information, and the invalidity indication information is used to indicate that a first part of DRX parameters in the first DRX configuration are invalid in the second DRX configuration.

31. The method according to claim 30, wherein
the second DRX configuration further comprises a second part of DRX parameters in the first DRX configuration, and configured values of the second part of DRX parameters in the first DRX configuration are different from those in the second DRX configuration.

32. The method according to any one of claims 27 to 31, further comprising:
when performing a DRX operation based on the second DRX configuration, if determining to reuse a configured value, of a specified DRX parameter, in the first DRX configuration, performing the DRX operation based on the configured value of the specified DRX parameter and a configured value, of a DRX parameter, comprised in the second DRX configuration.

33. The method according to claim 26, wherein
the DRX configuration information comprises at least a first DRX configuration and a second DRX configuration, and DRX parameters comprised in the first DRX configuration are the same as or are different from DRX parameters comprised in the second DRX configuration.

34. The method according to claim 26, wherein
the DRX configuration information comprises one first parameter set and M second parameter sets, wherein
the first parameter set comprises a configured value of a fixed DRX parameter, the second parameter set comprises a configured value of a variable DRX parameter, and different second parameter sets comprise different configured values of the variable DRX parameter.

35. The method according to claim 34, further comprising:
performing a DRX operation based on the configured value of the fixed DRX parameter in the first parameter set and a configured value of a variable DRX parameter in a second parameter set corresponding to a specified sub configuration index.

36. The method according to claim 26, wherein after the receiving DRX configuration information, the method further comprises:
performing a DRX operation on an active resource set by using a target DRX parameter in the M DRX configurations, wherein there is an association relationship between the target DRX parameters and the active resource set, and the active resource set comprises a carrier or a BWP.

37. The method according to claim 26, wherein
the DRX configuration information comprises the M DRX configurations, and each DRX configuration carries a configuration index; or
the DRX configuration information comprises one first parameter set and M second parameter sets, and each second parameter set carries a sub configuration index, wherein
the first parameter set comprises a configured value of a fixed DRX parameter, the second parameter set comprises a configured value of a variable DRX parameter, and different second parameter sets comprise different configured values of the variable DRX parameter.

38. The method according to claim 26, wherein
the DRX configuration information comprises the M DRX configurations, and there is a mapping relationship between locations of the DRX configurations in RRC signaling and configuration indices.

39. The method according to claim 26, wherein
a default configuration is comprised in the plurality of DRX configurations, and the default configuration is used by the terminal device to perform a DRX operation when activating a DRX state.

40. The method according to claim 39, wherein
the DRX configuration information comprises the M DRX configurations, and the default configuration is the first of the M DRX configurations that is present in RRC signaling; or
the default configuration is a DRX configuration in the M DRX configurations that corresponds to a specified configuration index.

41. The method according to claim 39, wherein
the DRX configuration information carries a default index, and the default index is a configuration index of the default configuration; or
the DRX configuration information comprises the M DRX configurations, each of the M DRX configurations comprises an index, the index is used to indicate whether the DRX configuration is the default configuration, the index in the default configuration is a default value, and the index in the rest of the DRX configurations is not the default value; or
the default configuration comprises an index, the index is a default value, and the rest of the DRX configurations does not comprise the index.

42. The method according to claim 26, wherein when the DRX configuration information is received, the method further comprises:
performing a DRX operation.

43. The method according to claim 26, wherein when the DRX configuration information is received, the method further comprises:
storing the M DRX configurations.

44. The method according to claim 26, wherein
the DRX configuration information carries a DRX state option, and the DRX state option is used by the terminal device to perform, when receiving the DRX configuration information, an operation corresponding to the DRX state option.

45. The method according to claim 44, wherein
the DRX state option comprises activation, and when the DRX configuration information is received, the method further comprises: performing a DRX operation based on the DRX state option; or
the DRX state option is deactivation, and when the DRX configuration information is received, the method further comprises: storing the M DRX configurations based on the DRX state option.

46. The method according to claim 26, wherein
the DRX configuration information carries operation indication information, and the operation indication information is used to indicate that the terminal device performs at least one of the following operations after receiving the DRX configuration information: activating a DRX state at a first occasion, or performing a deactivation operation at a second occasion.

47. The method according to claim 46, wherein after the receiving DRX configuration information, the method further comprises:
performing a DRX operation at the first occasion; or
storing the plurality of DRX configurations at the second occasion; or
performing, at the second occasion, a deactivation operation on a DRX configuration of the second occasion, and performing a DRX operation at the first occasion, wherein the first occasion is later than the second occasion; or
performing a DRX operation at the first occasion, and performing, at the second occasion, a deactivation operation on a DRX configuration of the second occasion, wherein the second occasion is later than the first occasion.

48. The method according to claim 42, 45, or 47, wherein
the M DRX configurations comprise a default configuration, and the default configuration is used by the terminal device to perform the DRX operation when activating the DRX state; and
the performing a DRX operation comprises:
performing the DRX operation based on the default configuration.

49. The method according to claim 26, further comprising:
receiving condition information from the network device, wherein the condition information is used by the terminal device to automatically resume a specified DRX configuration.

50. The method according to claim 49, wherein
the condition information comprises preset duration; and
after the receiving automatic-resume condition information, the method further comprises:
resuming the specified DRX configuration when first duration is greater than or equal to the preset duration, or resuming the specified DRX configuration at the start of the first DRX cycle after accumulative timing of first duration stops, wherein the first duration is accumulated duration during which the terminal device does not have uplink or downlink data transmission.

51. The method according to claim 49, wherein
the condition information comprises a preset DRX cycle number; and
after the receiving automatic-resume condition information, the method further comprises:
resuming the specified DRX configuration when the number of DRX cycles comprised in first duration is greater than or equal to the preset DRX cycle number; or
resuming the specified DRX configuration at the start of the first DRX cycle after accumulative timing of first duration stops, wherein the first duration is accumulated duration during which the terminal device does not have uplink or downlink data transmission.

52. The method according to claim 26, wherein after the receiving DRX configuration information, the method further comprises:
receiving reconfiguration indication information from the network device, wherein the reconfiguration indication information is used to reconfigure the M DRX configurations.

53. The method according to claim 52, wherein
the reconfiguration comprises full configuration, and the reconfiguration indication information comprises N DRX configurations, wherein N is an integer greater than or equal to 1; and
after the receiving reconfiguration indication information, the method further comprises:
updating the M DRX configurations with the N DRX configurations.

54. The method according to claim 52, wherein
the reconfiguration comprises incremental configuration, and the reconfiguration indication information comprises L DRX configurations, wherein L is an integer greater than or equal to 1; and
after the receiving reconfiguration indication information, the method further comprises:
adding the L DRX configurations on a basis of the M DRX configurations.

55. The method according to claim 54, wherein
the reconfiguration indication information further comprises at least one of a first configuration index or a second configuration index, the first configuration index is a configuration index corresponding to a to-be-retained DRX configuration in the M DRX configurations, and the second configuration index is a configuration index corresponding to a to-be-updated DRX configuration in the M DRX configurations; and
after the receiving reconfiguration indication information, the method further comprises at least one of the following:
retaining the DRX configuration corresponding to the first configuration index in the M DRX configurations; or
updating, based on the L DRX configurations, the DRX configuration corresponding to the second configuration index in the M DRX configurations.

56. The method according to claim 26, wherein after the receiving DRX configuration information, the method further comprises:
receiving deconfiguration indication information from the network device, wherein the deconfiguration indication information is used to deconfigure at least one of the M DRX configurations.

57. The method according to claim 56, wherein
the deconfiguration indication information comprises a third configuration index, and the third configuration index is a configuration index corresponding to a to-be-deleted DRX configuration in the M DRX configurations; and
after the receiving deconfiguration indication information, the method further comprises:
deleting the DRX configuration corresponding to the third configuration index in the M DRX configurations.

58. The method according to claim 26, wherein
one DRX configuration comprises a plurality of parameter sets, one parameter set comprises a configured value of at least one DRX parameter, and each parameter set corresponds to a set index.

59. A network device, comprising:
a sending module, configured to send discontinuous reception DRX configuration information to a terminal device, wherein the DRX configuration information is used by the terminal device to determine M DRX configurations, and M is an integer greater than or equal to 2.

60. A terminal device, comprising:
a receiving module, configured to receive DRX configuration information from a network device, wherein the DRX configuration information is used by the terminal device to determine M DRX configurations, and M is an integer greater than or equal to 2.

61. A network device, comprising a memory, a processor, and a computer program stored in the memory and capable of running on the processor, wherein when the computer program is executed by the processor, steps of the method according to any one of claims 1 to 25 are implemented.

62. A terminal device, comprising a memory, a processor, and a computer program stored in the memory and capable of running on the processor, wherein when the computer program is executed by the processor, steps of the method according to any one of claims 26 to 58 are implemented.

63. A computer-readable storage medium, wherein the computer-readable storage medium stores a computer program, and when the computer program is executed by a processor, steps of the method according to any one of claims 1 to 25 are implemented, or steps of the method according to any one of claims 26 to 58 are implemented.
